# EUROPEAN PATENT APPLICATION

(11) **EP 4 629 679 A1**
(43) Date of publication of application: **08.10.2025**
(21) Application number: 23915001.4
(22) Date of filing: 27.12.2023
(51) Int. Cl.: H04W 12/069, H04W 12/041, H04W 12/03, H04W 12/40, G06F 21/64, H04L 9/32, H04W 88/02

(54) **METHOD AND ELECTRONIC DEVICE FOR CONFIGURING NETWORK LOCK FUNCTION OF ELECTRONIC DEVICE**

(30) Priority: 03.01.2023 KR 20230000585; 16.01.2023 KR 20230006169
(71) Applicant: Samsung Electronics Co., Ltd., Suwon-si, Gyeonggi-do 16677 (KR)
(72) Inventor: CHO, Donghyun, Suwon-si, Gyeonggi-do 16677 (KR); NA, Seungjoo, Suwon-si, Gyeonggi-do 16677 (KR); PARK, Junwoo, Suwon-si, Gyeonggi-do 16677 (KR); YOON, Rakyoung, Suwon-si, Gyeonggi-do 16677 (KR)
(74) Representative: Gulde & Partner
(86) International application number: PCT/KR2023/021702
(87) International publication number: WO 2024/147541

(57) **Abstract**

The electronic device may include an application processor, a communication processor, and a security subsystem for processing a security function related to the application processor or the communication processor. The security subsystem may decrypt, on the basis of reception of a request for decrypting a nonce value from the communication processor, the nonce value and transmit the decrypted nonce value to the communication processor, and may generate a signature by using the nonce value and network lock data on the basis of reception of a request for network lock signature from the communication processor and transmit the generated signature to the communication processor. The communication processor may receive a signature value generated from the security subsystem, may compare a signature value pre-stored in the application processor with a signature value received from the security subsystem, and may determine whether to restrict use of the electronic device on the basis of whether the signature value pre-stored in the application processor and the signature value received from the security subsystem are matched to each other.

## Description

### [Technical Field]

The present document relates to an electronic device, and for example, to an electronic device for configuring a network lock function and an operating method thereof.

### [Background Art]

An electronic device may provide various functions due to the development of information and communication technology and semiconductor technology. For example, various functions may include at least one of a call function, a message function, a broadcasting function, a wireless Internet function, a camera function, an electronic payment function, a user authentication function, or a music playback function.

As functions that users access through electronic devices become more diverse, the amount of personal information stored in the electronic devices is increasing. For example, the personal information stored in the electronic device may include information that requires security settings, such as payment information, authentication information, and/or information related to credential.

The electronic device may include a security device, such as a security sub system, to enhance the security of the electronic device. The security sub system may be replaced by at least one of a security controller (SC), a primary security processor (PSP), or a HW crypto engine. Alternatively, the security sub system may include at least one of the security controller (SC), the primary security processor (PSP), or the HW crypto engine. The security sub system may use a network lock security scheme to secure the electronic device. The network lock operation scheme may include a server-based operation scheme and an offline 3rd generation partnership project (3GPP)-based operation scheme. The server-based operation scheme may issue a key using a device root key (DRK) certificate and generate a network lock data signature in a secure area (e.g., trustzone) of the application processor to prevent forgery.

### [Disclosure of Invention]

### [Technical Problem]

The server-based operation scheme uses the network lock signature based on the device root key (DRK) certificate. However, in the case of joint development manufacturing where it is difficult to inject the device root key (DRK) certificate, it may be difficult to maintain security using the network lock signature. In this case, a scheme may be required in which a communication processor generates and verifies a signature independently without using a server.

In addition, the server-based operation scheme may require a scheme in which a communication processor generates and verifies a signature independently without using a server due to server maintenance costs.

The electronic device may include an application processor, a communication processor, and a security sub system for processing a security function related to the application processor or the communication processor. The security sub system may decrypt, based on reception of a request for decrypting a nonce value from the communication processor, the nonce value and transmit the decrypted nonce value to the communication processor, and may generate a signature by using the nonce value and network lock data based on reception of a request for network lock signature from the communication processor and transmit the generated signature to the communication processor. The communication processor may receive a signature value generated from the security sub system, compare a signature value pre-stored in the application processor with a signature value received from the security sub system, and determine whether to restrict use of the electronic device based on whether the signature value pre-stored in the application processor and the signature value received from the security sub system are matched to each other.

A method for configuring a network lock function of an electronic device may include: receiving an encrypted nonce value and requesting decryption from a security sub system; receiving a decrypted nonce value from the security sub system and requesting a signature from the security sub system based on the nonce value; receiving a signature generated based on the nonce value and network lock data from the security sub system; and performing verification by comparing the signature received from the security sub system with a pre-stored signature.

The electronic device according to the present document may enhance network lock security without a device root key (DRK) certificate and/or a security area of an application processor.

The electronic device according to the present document may provide a function so that even a service provider that does not use a server may enhance a network lock security function. In addition, the electronic device may reduce the server maintenance costs by enabling the communication processor to independently generate and verify the signature without using a separate server.

The electronic device according to the present document may enhance offline-based 3GPP network lock security.

### [Brief Description of Drawings]

FIG. 1 is a block diagram of an electronic device in a network environment according to various embodiments.
FIG. 2 is a block diagram illustrating a configuration of an electronic device according to an embodiment.
FIG. 3 is a flowchart illustrating a method for generating a network lock signature of an electronic device according to an embodiment.
FIG. 4 is a flowchart illustrating a method for checking a network lock signature of an electronic device according to an embodiment.
FIG. 5A illustrates a process for storing a network lock signature in an electronic device according to an embodiment.
FIG. 5B illustrates a process for verifying a network lock signature in an electronic device according to an embodiment.

### [Mode for the Invention]

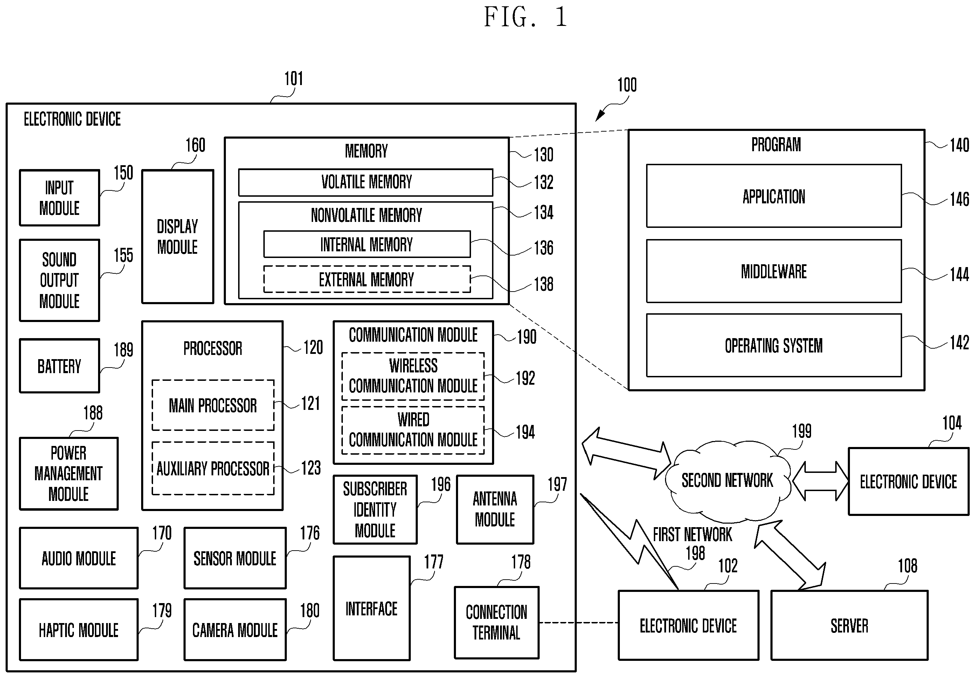

Fig. 1 is a block diagram illustrating an electronic device 101 in a network environment 100 according to various embodiments. Referring to Fig. 1, the electronic device 101 in the network environment 100 may communicate with an electronic device 102 via a first network 198 (e.g., a short-range wireless communication network), or at least one of an electronic device 104 or a server 108 via a second network 199 (e.g., a long-range wireless communication network). According to an embodiment, the electronic device 101 may communicate with the electronic device 104 via the server 108. According to an embodiment, the electronic device 101 may include a processor 120, memory 130, an input module 150, a sound output module 155, a display module 160, an audio module 170, a sensor module 176, an interface 177, a connecting terminal 178, a haptic module 179, a camera module 180, a power management module 188, a battery 189, a communication module 190, a subscriber identification module(SIM) 196, or an antenna module 197. In some embodiments, at least one of the components (e.g., the connecting terminal 178) may be omitted from the electronic device 101, or one or more other components may be added in the electronic device 101. In some embodiments, some of the components (e.g., the sensor module 176, the camera module 180, or the antenna module 197) may be implemented as a single component (e.g., the display module 160).

The processor 120 may execute, for example, software (e.g., a program 140) to control at least one other component (e.g., a hardware or software component) of the electronic device 101 coupled with the processor 120, and may perform various data processing or computation. According to one embodiment, as at least part of the data processing or computation, the processor 120 may store a command or data received from another component (e.g., the sensor module 176 or the communication module 190) in volatile memory 132, process the command or the data stored in the volatile memory 132, and store resulting data in non-volatile memory 134. According to an embodiment, the processor 120 may include a main processor 121 (e.g., a central processing unit (CPU) or an application processor (AP)), or an auxiliary processor 123 (e.g., a graphics processing unit (GPU), a neural processing unit (NPU), an image signal processor (ISP), a sensor hub processor, or a communication processor (CP)) that is operable independently from, or in conjunction with, the main processor 121. For example, when the electronic device 101 includes the main processor 121 and the auxiliary processor 123, the auxiliary processor 123 may be adapted to consume less power than the main processor 121, or to be specific to a specified function. The auxiliary processor 123 may be implemented as separate from, or as part of the main processor 121.

The auxiliary processor 123 may control at least some of functions or states related to at least one component (e.g., the display module 160, the sensor module 176, or the communication module 190) among the components of the electronic device 101, instead of the main processor 121 while the main processor 121 is in an inactive (e.g., sleep) state, or together with the main processor 121 while the main processor 121 is in an active state (e.g., executing an application). According to an embodiment, the auxiliary processor 123 (e.g., an image signal processor or a communication processor) may be implemented as part of another component (e.g., the camera module 180 or the communication module 190) functionally related to the auxiliary processor 123. According to an embodiment, the auxiliary processor 123 (e.g., the neural processing unit) may include a hardware structure specified for artificial intelligence model processing. An artificial intelligence model may be generated by machine learning. Such learning may be performed, e.g., by the electronic device 101 where the artificial intelligence is performed or via a separate server (e.g., the server 108). Learning algorithms may include, but are not limited to, e.g., supervised learning, unsupervised learning, semi-supervised learning, or reinforcement learning. The artificial intelligence model may include a plurality of artificial neural network layers. The artificial neural network may be a deep neural network (DNN), a convolutional neural network (CNN), a recurrent neural network (RNN), a restricted boltzmann machine (RBM), a deep belief network (DBN), a bidirectional recurrent deep neural network (BRDNN), deep Q-network or a combination of two or more thereof but is not limited thereto. The artificial intelligence model may, additionally or alternatively, include a software structure other than the hardware structure.

The memory 130 may store various data used by at least one component (e.g., the processor 120 or the sensor module 176) of the electronic device 101. The various data may include, for example, software (e.g., the program 140) and input data or output data for a command related thererto. The memory 130 may include the volatile memory 132 or the non-volatile memory 134.

The program 140 may be stored in the memory 130 as software, and may include, for example, an operating system (OS) 142, middleware 144, or an application 146.

The input module 150 may receive a command or data to be used by another component (e.g., the processor 120) of the electronic device 101, from the outside (e.g., a user) of the electronic device 101. The input module 150 may include, for example, a microphone, a mouse, a keyboard, a key (e.g., a button), or a digital pen (e.g., a stylus pen).

The sound output module 155 may output sound signals to the outside of the electronic device 101. The sound output module 155 may include, for example, a speaker or a receiver. The speaker may be used for general purposes, such as playing multimedia or playing record. The receiver may be used for receiving incoming calls. According to an embodiment, the receiver may be implemented as separate from, or as part of the speaker.

The display module 160 may visually provide information to the outside (e.g., a user) of the electronic device 101. The display module 160 may include, for example, a display, a hologram device, or a projector and control circuitry to control a corresponding one of the display, hologram device, and projector. According to an embodiment, the display module 160 may include a touch sensor adapted to detect a touch, or a pressure sensor adapted to measure the intensity of force incurred by the touch.

The audio module 170 may convert a sound into an electrical signal and vice versa. According to an embodiment, the audio module 170 may obtain the sound via the input module 150, or output the sound via the sound output module 155 or a headphone of an external electronic device (e.g., an electronic device 102) directly (e.g., wiredly) or wirelessly coupled with the electronic device 101.

The sensor module 176 may detect an operational state (e.g., power or temperature) of the electronic device 101 or an environmental state (e.g., a state of a user) external to the electronic device 101, and then generate an electrical signal or data value corresponding to the detected state. According to an embodiment, the sensor module 176 may include, for example, a gesture sensor, a gyro sensor, an atmospheric pressure sensor, a magnetic sensor, an acceleration sensor, a grip sensor, a proximity sensor, a color sensor, an infrared (IR) sensor, a biometric sensor, a temperature sensor, a humidity sensor, or an illuminance sensor.

The interface 177 may support one or more specified protocols to be used for the electronic device 101 to be coupled with the external electronic device (e.g., the electronic device 102) directly (e.g., wiredly) or wirelessly. According to an embodiment, the interface 177 may include, for example, a high definition multimedia interface (HDMI), a universal serial bus (USB) interface, a secure digital (SD) card interface, or an audio interface.

A connecting terminal 178 may include a connector via which the electronic device 101 may be physically connected with the external electronic device (e.g., the electronic device 102). According to an embodiment, the connecting terminal 178 may include, for example, a HDMI connector, a USB connector, a SD card connector, or an audio connector (e.g., a headphone connector).

The haptic module 179 may convert an electrical signal into a mechanical stimulus (e.g., a vibration or a movement) or electrical stimulus which may be recognized by a user via his tactile sensation or kinesthetic sensation. According to an embodiment, the haptic module 179 may include, for example, a motor, a piezoelectric element, or an electric stimulator.

The camera module 180 may capture a still image or moving images. According to an embodiment, the camera module 180 may include one or more lenses, image sensors, image signal processors, or flashes.

The power management module 188 may manage power supplied to the electronic device 101. According to one embodiment, the power management module 188 may be implemented as at least part of, for example, a power management integrated circuit (PMIC).

The battery 189 may supply power to at least one component of the electronic device 101. According to an embodiment, the battery 189 may include, for example, a primary cell which is not rechargeable, a secondary cell which is rechargeable, or a fuel cell.

The communication module 190 may support establishing a direct (e.g., wired) communication channel or a wireless communication channel between the electronic device 101 and the external electronic device (e.g., the electronic device 102, the electronic device 104, or the server 108) and performing communication via the established communication channel. The communication module 190 may include one or more communication processors that are operable independently from the processor 120 (e.g., the application processor (AP)) and supports a direct (e.g., wired) communication or a wireless communication. According to an embodiment, the communication module 190 may include a wireless communication module 192 (e.g., a cellular communication module, a short-range wireless communication module, or a global navigation satellite system (GNSS) communication module) or a wired communication module 194 (e.g., a local area network (LAN) communication module or a power line communication (PLC) module). A corresponding one of these communication modules may communicate with the external electronic device via the first network 198 (e.g., a short-range communication network, such as BluetoothTM, wireless-fidelity (Wi-Fi) direct, or infrared data association (IrDA)) or the second network 199 (e.g., a long-range communication network, such as a legacy cellular network, a 5G network, a next-generation communication network, the Internet, or a computer network (e.g., LAN or wide area network (WAN)). These various types of communication modules may be implemented as a single component (e.g., a single chip), or may be implemented as multi components (e.g., multi chips) separate from each other. The wireless communication module 192 may identify and authenticate the electronic device 101 in a communication network, such as the first network 198 or the second network 199, using subscriber information (e.g., international mobile subscriber identity (IMSI)) stored in the subscriber identification module 196.

The wireless communication module 192 may support a 5G network, after a 4G network, and next-generation communication technology, e.g., new radio (NR) access technology. The NR access technology may support enhanced mobile broadband (eMBB), massive machine type communications (mMTC), or ultra-reliable and low-latency communications (URLLC). The wireless communication module 192 may support a high-frequency band (e.g., the mmWave band) to achieve, e.g., a high data transmission rate. The wireless communication module 192 may support various technologies for securing performance on a high-frequency band, such as, e.g., beamforming, massive multiple-input and multiple-output (massive MIMO), full dimensional MIMO (FD-MIMO), array antenna, analog beam-forming, or large scale antenna. The wireless communication module 192 may support various requirements specified in the electronic device 101, an external electronic device (e.g., the electronic device 104), or a network system (e.g., the second network 199). According to an embodiment, the wireless communication module 192 may support a peak data rate (e.g., 20Gbps or more) for implementing eMBB, loss coverage (e.g., 164dB or less) for implementing mMTC, or U-plane latency (e.g., 0.5ms or less for each of downlink (DL) and uplink (UL), or a round trip of 1ms or less) for implementing URLLC.

The antenna module 197 may transmit or receive a signal or power to or from the outside (e.g., the external electronic device) of the electronic device 101. According to an embodiment, the antenna module 197 may include an antenna including a radiating element composed of a conductive material or a conductive pattern formed in or on a substrate (e.g., a printed circuit board (PCB)). According to an embodiment, the antenna module 197 may include a plurality of antennas (e.g., array antennas). In such a case, at least one antenna appropriate for a communication scheme used in the communication network, such as the first network 198 or the second network 199, may be selected, for example, by the communication module 190 (e.g., the wireless communication module 192) from the plurality of antennas. The signal or the power may then be transmitted or received between the communication module 190 and the external electronic device via the selected at least one antenna. According to an embodiment, another component (e.g., a radio frequency integrated circuit (RFIC)) other than the radiating element may be additionally formed as part of the antenna module 197.

According to various embodiments, the antenna module 197 may form a mmWave antenna module. According to an embodiment, the mmWave antenna module may include a printed circuit board, a RFIC disposed on a first surface (e.g., the bottom surface) of the printed circuit board, or adjacent to the first surface and capable of supporting a designated high-frequency band (e.g., the mmWave band), and a plurality of antennas (e.g., array antennas) disposed on a second surface (e.g., the top or a side surface) of the printed circuit board, or adjacent to the second surface and capable of transmitting or receiving signals of the designated high-frequency band.

At least some of the above-described components may be coupled mutually and communicate signals (e.g., commands or data) therebetween via an inter-peripheral communication scheme (e.g., a bus, general purpose input and output (GPIO), serial peripheral interface (SPI), or mobile industry processor interface (MIPI)).

According to an embodiment, commands or data may be transmitted or received between the electronic device 101 and the external electronic device 104 via the server 108 coupled with the second network 199. Each of the electronic devices 102 or 104 may be a device of a same type as, or a different type, from the electronic device 101. According to an embodiment, all or some of operations to be executed at the electronic device 101 may be executed at one or more of the external electronic devices 102, 104, or 108. For example, if the electronic device 101 should perform a function or a service automatically, or in response to a request from a user or another device, the electronic device 101, instead of, or in addition to, executing the function or the service, may request the one or more external electronic devices to perform at least part of the function or the service. The one or more external electronic devices receiving the request may perform the at least part of the function or the service requested, or an additional function or an additional service related to the request, and transfer an outcome of the performing to the electronic device 101. The electronic device 101 may provide the outcome, with or without further processing of the outcome, as at least part of a reply to the request. To that end, a cloud computing, distributed computing, mobile edge computing (MEC), or client-server computing technology may be used, for example. The electronic device 101 may provide ultra low-latency services using, e.g., distributed computing or mobile edge computing. In another embodiment, the external electronic device 104 may include an internet-of-things (IoT) device. The server 108 may be an intelligent server using machine learning and/or a neural network. According to an embodiment, the external electronic device 104 or the server 108 may be included in the second network 199. The electronic device 101 may be applied to intelligent services (e.g., smart home, smart city, smart car, or healthcare) based on 5G communication technology or IoT-related technology.

The electronic device according to various embodiments may be one of various types of electronic devices. The electronic devices may include, for example, a portable communication device (e.g., a smartphone), a computer device, a portable multimedia device, a portable medical device, a camera, a wearable device, or a home appliance. According to an embodiment of the disclosure, the electronic devices are not limited to those described above.

It should be appreciated that various embodiments of the present disclosure and the terms used therein are not intended to limit the technological features set forth herein to particular embodiments and include various changes, equivalents, or replacements for a corresponding embodiment. With regard to the description of the drawings, similar reference numerals may be used to refer to similar or related elements. It is to be understood that a singular form of a noun corresponding to an item may include one or more of the things, unless the relevant context clearly indicates otherwise. As used herein, each of such phrases as "A or B," "at least one of A and B," "at least one of A or B," "A, B, or C," "at least one of A, B, and C," and "at least one of A, B, or C," may include any one of, or all possible combinations of the items enumerated together in a corresponding one of the phrases. As used herein, such terms as "1st" and "2nd," or "first" and "second" may be used to simply distinguish a corresponding component from another, and does not limit the components in other aspect (e.g., importance or order). It is to be understood that if an element (e.g., a first element) is referred to, with or without the term "operatively" or "communicatively", as "coupled with," "coupled to," "connected with," or "connected to" another element (e.g., a second element), it means that the element may be coupled with the other element directly (e.g., wiredly), wirelessly, or via a third element.

As used in connection with various embodiments of the disclosure, the term "module" may include a unit implemented in hardware, software, or firmware, and may interchangeably be used with other terms, for example, "logic," "logic block," "part," or "circuitry". A module may be a single integral component, or a minimum unit or part thereof, adapted to perform one or more functions. For example, according to an embodiment, the module may be implemented in a form of an application-specific integrated circuit (ASIC).

Various embodiments as set forth herein may be implemented as software (e.g., the program 140) including one or more instructions that are stored in a storage medium (e.g., internal memory 136 or external memory 138) that is readable by a machine (e.g., the electronic device 101). For example, a processor (e.g., the processor 120) of the machine (e.g., the electronic device 101) may invoke at least one of the one or more instructions stored in the storage medium, and execute it, with or without using one or more other components under the control of the processor. This allows the machine to be operated to perform at least one function according to the at least one instruction invoked. The one or more instructions may include a code generated by a complier or a code executable by an interpreter. The machine-readable storage medium may be provided in the form of a non-transitory storage medium. Wherein, the term "non-transitory" simply means that the storage medium is a tangible device, and does not include a signal (e.g., an electromagnetic wave), but this term does not differentiate between where data is semi-permanently stored in the storage medium and where the data is temporarily stored in the storage medium.

According to an embodiment, a method according to various embodiments of the disclosure may be included and provided in a computer program product. The computer program product may be traded as a product between a seller and a buyer. The computer program product may be distributed in the form of a machine-readable storage medium (e.g., compact disc read only memory (CD-ROM)), or be distributed (e.g., downloaded or uploaded) online via an application store (e.g., PlayStoreTM), or between two user devices (e.g., smart phones) directly. If distributed online, at least part of the computer program product may be temporarily generated or at least temporarily stored in the machine-readable storage medium, such as memory of the manufacturer's server, a server of the application store, or a relay server.

According to various embodiments, each component (e.g., a module or a program) of the above-described components may include a single entity or multiple entities, and some of the multiple entities may be separately disposed in different components. According to various embodiments, one or more of the above-described components may be omitted, or one or more other components may be added. Alternatively or additionally, a plurality of components (e.g., modules or programs) may be integrated into a single component. In such a case, according to various embodiments, the integrated component may still perform one or more functions of each of the plurality of components in the same or similar manner as they are performed by a corresponding one of the plurality of components before the integration. According to various embodiments, operations performed by the module, the program, or another component may be carried out sequentially, in parallel, repeatedly, or heuristically, or one or more of the operations may be executed in a different order or omitted, or one or more other operations may be added.

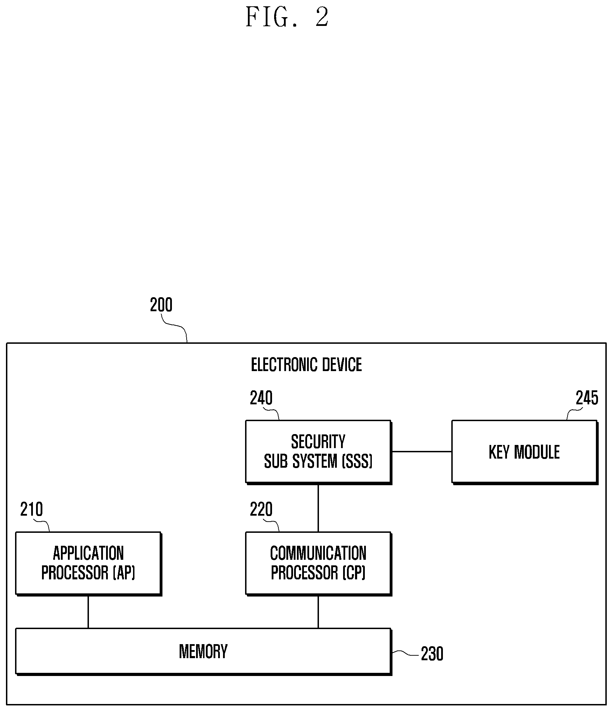

FIG. 2 is a block diagram illustrating a configuration of an electronic device according to an embodiment.

According to an embodiment, an electronic device 200 may include an application processor 210, a communication processor 220, a memory 230, a security sub system (SSS) 240, and a key module 245, and some of the illustrated components may be omitted or replaced. The electronic device 200 may further include at least some of the configurations and/or functions of the electronic device 101 of FIG. 1. At least some of the respective components of the illustrated (or not illustrated) electronic device may be operatively, functionally, and/or electrically connected to each other.

According to an embodiment, the application processor 210 may be configured to perform operations or data processing related to control and/or communication of the respective components of the electronic device, and may be configured with one or more processors. The application processor 210 may include at least some of the components and/or functions of the processor 120 of FIG. 1. There is no limitation to the operation and data processing functions that the application processor 210 may implement on the electronic device. However, features related to security through a network lock signature will be described in detail below. The operations of the application processor 210 may be performed by loading instructions stored in the memory 230.

According to an embodiment, the application processor 210 may store an execution result of a security function (e.g., encryption key) received from the communication processor 220 in the memory 230. For example, the security function may include at least one of generation of a signature of data related to a task, inspection of a signature of data related to a task, authentication related to a task, generation of a certificate of data related to a task, inspection of a certificate of data related to a task, encryption of data related to a task, decryption of data related to a task, or generation of an encryption key related to a task.

According to an embodiment, when receiving an initialization request signal from the communication processor 220, the application processor 210 may delete an execution result (e.g., encryption key) of the received security function stored in the memory 230.

According to an embodiment, the communication processor 220 may perform data transmission and/or reception via cellular communication. The communication processor 220 may transmit user data received from the application processor 210 via the cellular communication, and may transmit the user data received via the cellular communication to the application processor 210. The cellular communication may be any one of the communication schemes that the electronic device 101 may support, and may be, for example, a communication scheme using a 5th generation mobile communication scheme (e.g., new radio). Alternatively, the cellular communication may be a communication scheme using a 4th generation mobile communication scheme (e.g., long term evolution).

According to an embodiment, the communication processor 220 may store the network lock signature in the application processor 210 or the memory 230. The communication processor 220 may generate a different signature using a random value (e.g., nonce) not to generate the same signature every time when generating the network lock signature. When the signature value stored in the application processor 210 or the memory 230 is the same every time, a hacker may attempt a replay attack that reuses the signature values. The communication processor 220 may prevent the replay attack by generating the signature using the random value.

According to an embodiment, the communication processor 220 may include network lock data. The network lock data may include at least one of network lock information, whether the network lock is activated, whether the network lock is deactivated, network lock type information, network lock service provider information, subscriber identity module (SIM) lock information, a network control key (NCK), a network subset control key (NSCK), a service provider control key (SPCK), a master control key (MCK), a corporate control key (CCK), a personalization control key (PCK), personal identification number (PIN) information, a network lock password, a password, network information, MCC/MNC allow list of the SIM, MCC/MNC block list of the SIM, temporary unlock status, a temporary unlock time, or temporary unlock validity period.

The network lock data may be stored in a nonvolatile memory (NVM). The nonvolatile memory (NVM) may include, for example, at least one of a ROM or a flash memory (e.g., universal flash storage (UFS), embedded multi-media controller (eMMC) memory, solid state disk (SSD)), hard disk drive (HDD), optical disk, replay protection memory block (RPMB), or advanced RPMB that may retain data even when power is not supplied. For example, the nonvolatile memory may be included in the memory 230 or in a memory other than the memory 230.

According to an embodiment, the electronic device 200 includes one or more memories 230, and the memory 230 may include a main memory and storage. The main memory may include a volatile memory such as a dynamic random access memory (DRAM), a static RAM (SRAM), or a synchronous dynamic RAM (SDRAM). Alternatively, a memory 450 is a non-volatile memory, and may include a large-capacity storage device. The storage may include at least one of a one time programmable ROM (OTPROM), a PROM, an EPROM, an EEPROM, a mask ROM, a flash ROM, a flash memory, a hard drive, or a solid state drive (SSD). The memory 230 may store various file data, and the stored file data may be updated according to the operation of the application processor 210.

The application processor 210 may further include a remote file system (RFS) daemon or a non-volatile (NV) daemon (not illustrated). The communication processor 220 may not include a storage device (e.g., universal flash storage (UFS) or NAND flash). For this reason, the communication processor 220 may not be able to read and write files. The communication processor 220 may read and store data using the application processor 210. The remote file system (RFS) daemon or the non-volatile (NV) daemon (not illustrated) operates in a radio interface layer (RIL) or a kernel within the application processor 210 and may operate to read and write files written on the communication processor 220. The communication processor 220 may store data using the remote file system (RFS) daemon or the non-volatile (NV) daemon 215 on the electronic device 101 and read and use the stored data.

According to an embodiment, the security sub system (SSS) 240 may encrypt data received from the communication processor 220 using the key module 245 and transmit the encrypted data back to the communication processor 220. The security sub system 240 may sign the data received from the communication processor 220 using the key module 245 and transmit the signed data back to the communication processor 220. The key module 245 may manage a key generated as a unique value for each chipset of the communication processor 220. The key module 245 may control encryption, decryption, and signature values to be generated differently using different keys for each chipset of the communication processor 220. The key module 245 may be included in the security sub system 240 or may be arranged in the electronic device 200 as a separate configuration from the security sub system 240. The security sub system 240 may have difficulty accessing a key of software running on the communication processor 220. The security sub system 240 may receive data to be signed and signature result data from the communication processor 220, but may not receive the key of the software running. For this reason, even if vulnerability occurs in the security of the software running on the communication processor 220, the access to the key may be blocked to maintain security.

According to an embodiment, the key module 245 may generate a random key to perform the security function of the security sub system 240. The key module 245 may manage the key of the communication processor 220. For example, the key module 245 may encrypt or decrypt the data received from the communication processor 220 to which access rights are assigned to the security sub system 240 based on the security key. For example, the key module 245 may perform at least one of a crypto operation, a hash operation, or a key derivation function (KDF) operation based on the security key. The key module 245 may include a memory (e.g., read only memory (ROM)) that stores the key of the communication processor 220. The key of the communication processor 220 may include one time programmable (OTP) or eFuse related to the communication processor 220.

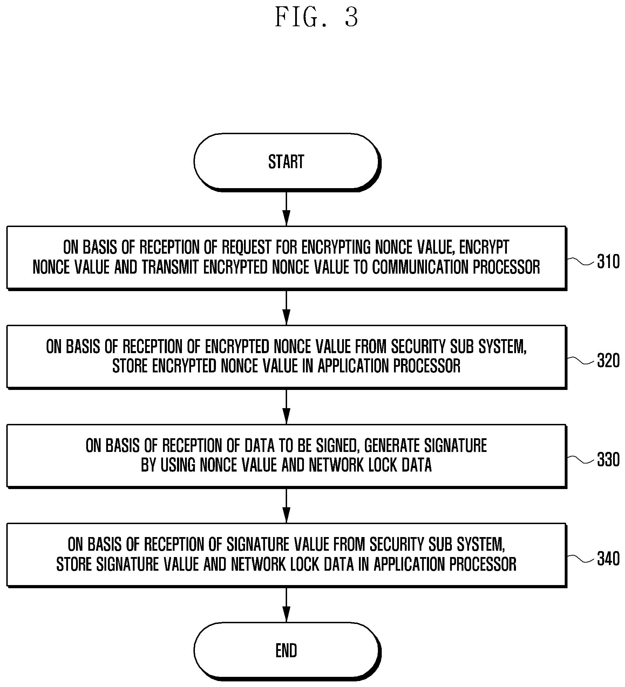

FIG. 3 is a flowchart illustrating a method for generating a network lock signature of an electronic device according to an embodiment.

The operations described with reference to FIG. 3 may be implemented based on instructions that may be stored in a computer recording medium or memory (e.g., the memory 130 of FIG. 1). The illustrated method may be executed by the electronic device (e.g., the electronic device 200 of FIG. 2) described with reference to FIGS. 1 and 2, and the technical features described above will be omitted below. The order of each operation of FIG. 3 may be changed, some operations may be omitted, and some operations may be performed simultaneously.

In operation 310, a security sub system (e.g., the security sub system 240 of FIG. 2) may encrypt a nonce value based on reception of a request for encrypting nonce value from a communication processor (e.g., the communication processor 220 of FIG. 2). The security sub system 240 may transmit the encrypted nonce value to the communication processor 220.

In operation 320, the communication processor 220 may store the encrypted nonce value in a memory within the application processor (e.g., the application processor 210 of FIG. 2) or an external memory 230 based on the reception of the encrypted nonce value from the security sub system 240.

In operation 330, the security sub system 240 may generate the signature by using the nonce value and the network lock data based on the reception of the data to be signed from the communication processor 220. The security sub system 240 may transmit the network lock data and the generated signature value to the communication processor 220.

In operation 340, the communication processor 220 may store the signature value and the network lock data in the memory within the application processor 210 or the external memory 230 based on the reception of the signature value from the security sub system 240.

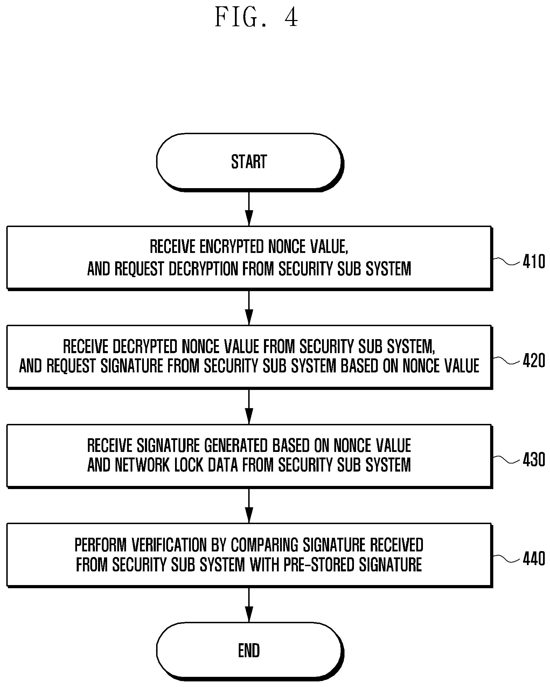

FIG. 4 is a flowchart illustrating a method for checking a network lock signature of an electronic device according to an embodiment.

The operations described with reference to FIG. 4 may be implemented based on instructions that may be stored in a computer recording medium or memory (e.g., the memory 130 of FIG. 1). The illustrated method may be executed by the electronic device (e.g., the electronic device 200 of FIG. 2) described with reference to FIGS. 1 and 2, and the technical features described above will be omitted below. The order of each operation of FIG. 4 may be changed, some operations may be omitted, and some operations may be performed simultaneously.

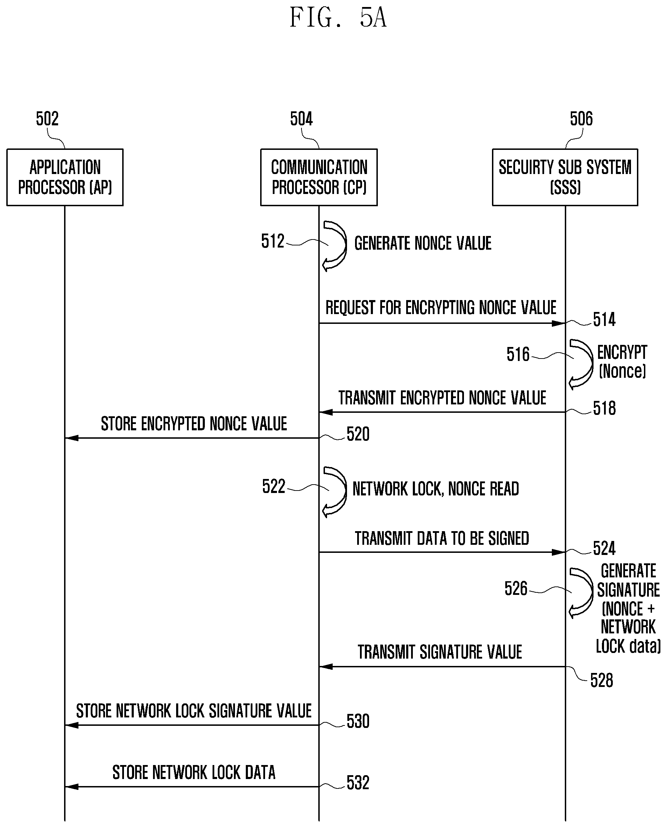

In operation 410, a communication processor (e.g., the communication processor 220 of FIG. 2) may receive an encrypted nonce value from an application processor (e.g., the application processor 210 of FIG. 2) and request decryption from a security sub system (e.g., the security sub system 240 of FIG. 2). A pre-stored signature may be required to compare signature values. When the pre-stored signature is the same every time, a hacker may attempt a replay attack that reuses the signature value. In order to prevent the replay attack, the electronic device 200 may generate and store a different signature every time using a random value or a nonce value, and encrypt and store the nonce value used to generate the signature. The process of generating and storing the different signature every time using the nonce value, and encrypting and storing the nonce value used to generate the signature will be described with reference to FIG. 5A.

In operation 420, the communication processor 220 may receive the decrypted nonce value from the security sub system 240 and request the signature from the security sub system 240 based on the nonce value. The communication processor 220 may request the decryption of the encrypted nonce value from the security sub system 240. The security sub system 240 may decrypt the encrypted nonce value using the key of the key module 245 and transmit the decrypted nonce value to the communication processor 220. The communication processor 220 may transmit data to be verified or data to be signed to the security sub system 240 and request the signature on the data.

In operation 430, the communication processor 220 may receive the signature generated based on the nonce value and the network lock data from the security sub system 240. The network lock data may include at least one of network lock information, whether the network lock is activated, whether the network lock is deactivated, network lock type information, subscriber identity module (SIM) lock information, NCK, SPCK, MCK, personal identification number (PIN) information, a network lock password, a password, network information, MCC/MNC allow list of the SIM, MCC/MNC block list of the SIM, temporary unlock status, a temporary unlock time, or temporary unlock validity period. The security sub system 240 may generate the signature based on the nonce value and the network lock data. A signature generation algorithm may include an asymmetric key message authentication scheme and a message authentication code (MAC) scheme. The type of the signature may include at least one of an RSA digital signature, a Lamport signature, an ElGamal signature, a Schnorr signature, a digital signature standard (DSS), a digital signature algorithm (DSA), ECDSA, KCDSA/EC-KCDSA, a hash-based message authentication code (HMAC), a cipher-based MAC (CMAC), NMAC, a cipher block chaining MAC (CBC-MAC), a quantum signature, or a quantum digital signature (QDS).

The security sub system 240 may transmit the generated signature to the communication processor 220.

In operation 440, the communication processor 220 may perform verification by comparing the signature received from the security sub system 240 with the pre-stored signature received from the application processor 210. The communication processor 220 may control the electronic device 200 to be used without a lock based on the fact that the signature received from the security sub system 240 and the pre-stored signature are the same. Alternatively, the communication processor 220 may restrict the use of the electronic device 200 without releasing the security lock based on the fact that a matching rate between the signature received from the security sub system 240 and the pre-stored signature is below a designated level.

The use of the electronic device 200 may be restricted by using at least one of a scheme of the electronic device 200 maintaining a network lock state, a scheme of controlling the electronic device 200 not to be connected to a network, a scheme of the electronic device 200 resetting the communication processor 220, a scheme of the electronic device 200 restricting the use of the SIM, a scheme of the electronic device 200 initializing international mobile equipment identity (IMEI), a scheme of the electronic device 200 causing the application processor 210 to enter an exception situation (e.g., kernel panic, etc.) to prevent the terminal from being used, or a scheme of the electronic device 200 restricting booting of the communication processor 220.

FIG. 5A illustrates a process for storing a network lock signature in an electronic device according to an embodiment.

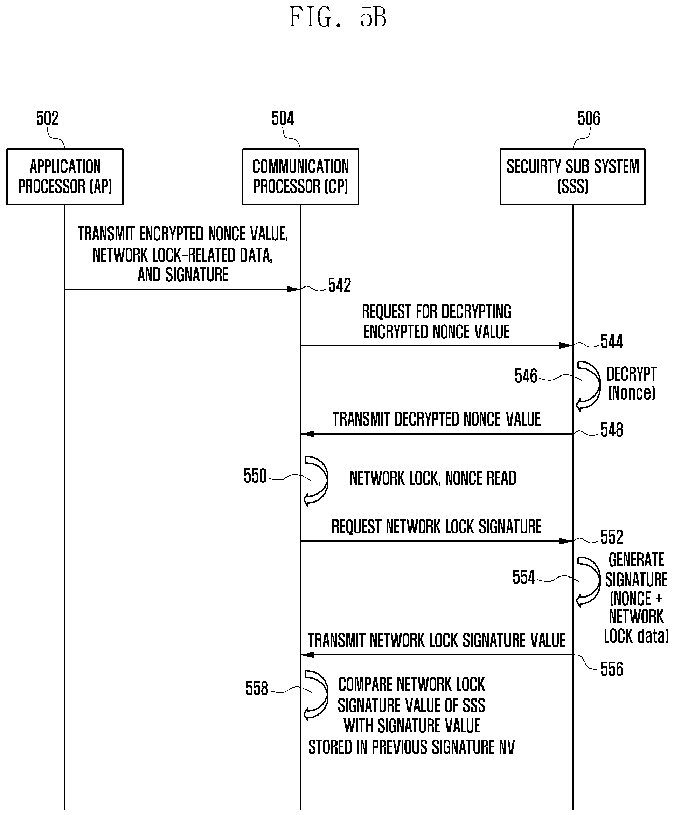

The operations described with reference to FIGS. 5A and 5B may be implemented based on instructions that may be stored in a computer recording medium or memory (e.g., the memory 130 of FIG. 1). The illustrated method may be executed by the electronic device (e.g., the electronic device 200 of FIG. 2) described with reference to FIGS. 1 and 2, and the technical features described above will be omitted below. The order of each operation of FIGS. 5A and 5B may be changed, some operations may be omitted, and some operations may be performed simultaneously.

In operation 512, a communication processor 504 may generate a nonce value. The nonce value may mean a randomly or arbitrarily generated value. The communication processor 504 may generate a different signature using a random value (e.g., nonce) not to generate the same signature every time when generating the network lock signature. When the signature value stored in an application processor 502 or the memory 130 is the same every time, a hacker may attempt a replay attack that reuses the signature values. The communication processor 504 may prevent the replay attack by generating the signature using the random value.

In operation 514, the communication processor 504 may transmit a nonce value generated for encryption of the nonce value to a security sub system (SSS) 506.

In operation 516, the security sub system 506 may encrypt the received nonce value. The encryption scheme may include a scheme using a symmetric key and a scheme using an asymmetric key. The symmetric key encryption scheme may include multiple encryption algorithms. The symmetric key encryption scheme may include at least one of, for example, advanced encryption standard (AES), data encryption standard (DES), 3DES, Aria, IDEA, SEED, RC5, or Twofish scheme. The asymmetric key encryption scheme may include multiple encryption algorithms. The asymmetric key encryption scheme includes at least one of, for example, the RSA, Robin, ECC, ECDH, ECIES, DSS, DSA, ElGamal, Rabin scheme, or the post quantum cryptography (PQC) scheme.

Thereafter, in operation 518, the security sub system 506 may transmit the encrypted nonce value to the communication processor 504.

In operation 520, the communication processor 504 may store the received encrypted nonce value in the application processor 502 or the memory 130.

In operation 522, the communication processor 504 may read the nonce value and the network lock data. The network lock data may include at least one of network lock information, whether the network lock is activated, whether the network lock is deactivated, network lock type information, subscriber identity module (SIM) lock information, NCK, SPCK, MCK, personal identification number (PIN) information, a network lock password, a password, network information, MCC/MNC allow list of the SIM, MCC/MNC block list of the SIM, temporary unlock status, a temporary unlock time, or temporary unlock validity period. In operation 524, the communication processor 504 may transmit data to be signed or data to be verified to the security sub system 506. Alternatively, the communication processor 504 may further read international mobile equipment identity (IMEI) or a mobile equipment identifier (MEID) in addition to the nonce value and the network lock data.

In operation 526, the security sub system 506 may generate the signature based on the nonce value and the network lock data. A signature generation algorithm may include an asymmetric key message authentication scheme and a message authentication code (MAC) scheme. Examples of the type of the signature may include at least one of an RSA digital signature, a Lamport signature, an ElGamal signature, a Schnorr signature, a digital signature standard (DSS), a digital signature algorithm (DSA), ECDSA, KCDSA/EC-KCDSA, a hash-based message authentication code (HMAC), a cipher-based MAC (CMAC), NMAC, a cipher block chaining MAC (CBC-MAC), a quantum signature, or a quantum digital signature (QDS). The security sub system 506 may generate the signature by further using the international mobile equipment identity (IMEI) or the mobile equipment identifier (MEID) in addition to the nonce value and the network lock data.

In operation 528, the security sub system 506 may transmit the generated signature to the communication processor 504.

In operation 530, the communication processor 504 may store the network lock signature value and/or the network lock data in the memory within the application processor 502 or the external memory 130. Thereafter, the communication processor 504 may verify the newly received signature using the network lock signature value and/or the network lock data stored in the application processor 502 or the memory 130. The process of verifying the newly received signature will be described with reference to FIG. 5B.

FIG. 5B illustrates a process for verifying a network lock signature in an electronic device according to an embodiment.

In operation 542, the application processor 502 may transmit the encrypted nonce value, the network lock-related data, and the signature to the communication processor 504. In operation 544, the communication processor 504 may request the decryption of the encrypted nonce value from the security sub system 506.

In operation 546, the security sub system 506 may receive and decrypt the encrypted nonce value from the communication processor 504. In operation 548, the security sub system 506 may transmit the decrypted nonce value to the communication processor 504.

In operation 550, the communication processor 504 may read the nonce value and the network lock data. The network lock data may include at least one of network lock information, whether the network lock is activated, whether the network lock is deactivated, network lock type information, subscriber identity module (SIM) lock information, NCK, SPCK, MCK, personal identification number (PIN) information, a network lock password, a password, network information, MCC/MNC allow list of the SIM, MCC/MNC block list of the SIM, temporary unlock status, a temporary unlock time, or temporary unlock validity period. Alternatively, the communication processor 504 may further read the international mobile equipment identity (IMEI) or the mobile equipment identifier (MEID) in addition to the nonce value and the network lock data.

In operation 552, the communication processor 504 may transmit the data to be signed or the data to be verified to the security sub system 506.

In operation 554, the security sub system 506 may generate the signature based on the nonce value and the network lock data. The security sub system 506 may generate the signature by further using the international mobile equipment identity (IMEI) or the mobile equipment identifier (MEID) in addition to the nonce value and the network lock data. In operation 556, the security sub system 506 may transmit the generated signature to the communication processor 504.

In operation 558, the communication processor 504 may perform the verification by comparing the signature received from the security sub system 506 with the pre-stored signature received from the application processor 502. The communication processor 504 may control the electronic device 200 to be used without a lock based on the fact that the signature received from the security sub system 506 and the pre-stored signature are the same. Alternatively, the communication processor 504 may restrict the use of the electronic device 200 without releasing the security lock based on the fact that a matching rate between the signature received from the security sub system 506 and the pre-stored signature is below a designated level.

The use of the electronic device 200 may be restricted by using at least one of the scheme of the electronic device 200 maintaining the network lock state, the scheme of controlling the electronic device 200 not to be connected to the network, the scheme of the electronic device 200 resetting the communication processor 220, the scheme of the electronic device 200 restricting the use of the SIM, the scheme of the electronic device 200 initializing international mobile equipment identity (IMEI), or the scheme of the electronic device 200 restricting the booting of the communication processor 220.

According to an embodiment, the electronic device 200 may perform operations 510 to 532 of FIG. 5A to regenerate the network lock signature value when the network lock signature value stored in the application processor 502 or the memory 130 is initialized. The electronic device 200 may store the regenerated network lock signature value in the application processor 502 or the memory 130. The electronic device 200 may compare the network lock signature value stored in the processor 502 or the memory 130 with the newly generated signature value on the security sub system 506 to determine whether to restrict the use of the electronic device 200.

The electronic device may include the application processor, the communication processor, and the security sub system for processing the security function related to the application processor or the communication processor. The security sub system may decrypt, based on the reception of the request for decrypting the nonce value from the communication processor, the nonce value and transmit the decrypted nonce value to the communication processor, and generate the signature by using the nonce value and the network lock data based on the reception of the request for the network lock signature from the communication processor and transmit the generated signature to the communication processor. The communication processor may receive the signature value generated from the security sub system, compare the signature value pre-stored in the application processor with the signature value received from the security sub system, and determine whether to restrict the use of the electronic device based on whether the signature value pre-stored in the application processor and the signature value received from the security sub system are matched to each other.

According to an embodiment, the security sub system may encrypt the nonce value and transmit the encrypted nonce value to the communication processor based on the reception of the request for encrypting the nonce value from the communication processor, and generate the signature by using the nonce value and the network lock data based on the reception of the data to be signed from the communication processor and transmit the generated signature to the communication processor, and the communication processor may store the encrypted nonce value in the application processor based on the reception of the encrypted nonce value from the security sub system, and store the signature value and the network lock data in the application processor based on the reception of the signature value from the security sub system.

According to an embodiment, when receiving the initialization request signal from the communication processor 220, the application processor may delete the stored signature value and network lock data.

According to an embodiment, the communication processor may complete the verification of the electronic device and release the security lock based on the fact that the signature value received from the security sub system and the signature value for another nonce value stored in the application processor are matched to each other.

According to an embodiment, the communication processor may determine that the verification of the electronic device has failed based on the fact that the signature value received from the security sub system and the signature value stored in the application processor are mismatched to each other, and may restrict the use of the electronic device.

According to an embodiment, the network lock data may include at least one of the network lock information, whether the network lock is activated, whether the network lock is deactivated, the network lock type information, the network lock service provider information, the subscriber identity module (SIM) lock information, the network control key (NCK), the network subset control key (NSCK), the service provider control key (SPCK), the master control key (MCK), the corporate control key (CCK), the personalization control key (PCK), the personal identification number (PIN) information, the network lock password, the password, the network information, the MCC/MNC allow list of the SIM, the MCC/MNC block list of the SIM, the temporary unlock status, the temporary unlock time, or the temporary unlock validity period.

According to an embodiment, the electronic device further includes a key module, and the key module may use, as a security key, a unique value fused to the one time programmable (OTP) memory or the eFuse to perform the security function of the security sub system, and encrypt or sign the data received from the communication processor 220 to which the access rights are assigned based on the security key.

According to an embodiment, the key module may perform at least one of the crypto operation, the hash operation, or the key derivation function (KDF) operation based on the security key, and the security sub system may generate the signature for the data received from the communication processor 220 using the key module.

According to an embodiment, the security sub system may perform the encryption and/or decryption of the nonce value by using the symmetric key scheme or the asymmetric key scheme based on the reception of the request for encrypting and/or decrypting the nonce value from the communication processor, in which the symmetric key encryption scheme may include at least one of the encryption algorithms of the advanced encryption standard (AES), data encryption standard (DES), 3DES, Aria, IDEA, SEED, RC5, or Twofish scheme, and the asymmetric key encryption scheme may include at least one of the encryption algorithms of the RSA, Robin, ECC, ECDH, ECIES, DSS, DSA, ElGamal, Rabin scheme, or the post quantum cryptography (PQC).

According to an embodiment, the security sub system may generate the signature based on the reception of the request for the network lock signature from the communication processor, the signature scheme includes the asymmetric key message authentication scheme or the message authentication code (MAC) scheme, and the type of the signature may include at least one of the RSA digital signature, the Lamport signature, the ElGamal signature, the Schnorr signature, the digital signature standard (DSS), the digital signature algorithm (DSA), the ECDSA, the KCDSA/EC-KCDSA, the hash-based message authentication code (HMAC), the cipher-based MAC (CMAC), the NMAC, the cipher block chaining MAC (CBC-MAC), the quantum signature, or the quantum digital signature (QDS).

The method for configuring a network lock function of an electronic device may include: receiving the encrypted nonce value and requesting the decryption from the security sub system, receiving the decrypted nonce value from the security sub system and requesting the signature from the security sub system based on the nonce value, receiving the signature generated based on the nonce value and network lock data from the security sub system, and performing the verification by comparing the signature received from the security sub system with the pre-stored signature.

The embodiments of the present document disclosed in this specification and drawings present merely specific examples to easily describe the technical contents according to the embodiments of the present document and to help understand the embodiments of the present document, and are not intended to limit the scope of the embodiments of the present document. Therefore, the scope of the embodiment of the present document should be interpreted to include all changes or modified forms derived based on the technical idea of an embodiment of the present document in the scope of an embodiment of the present document, in addition to the embodiments disclosed herein.

## Claims

1. An electronic device, comprising:
an application processor;
a communication processor; and
a security sub system processing a security function related to the application processor or the communication processor,
wherein the security sub system decrypts, based on reception of a request for decrypting a nonce value from the communication processor, the nonce value and transmit the decrypted nonce value to the communication processor, and generate a signature by using the nonce value and network lock data based on reception of a request for network lock signature from the communication processor and transmit the generated signature to the communication processor,
and
the communication processor receives a signature value generated from the security sub system,
compares a signature value pre-stored in the application processor with the signature value received from the security sub system, and
determines whether to restrict a use of the electronic device based on whether the signature value pre-stored in the application processor and the signature value received from the security sub system are matched to each other.

2. The electronic device of claim 1, wherein the security sub system encrypts, based on reception of a request for encrypting the nonce value from the communication processor, the nonce value and transmits the encrypted nonce value to the communication processor, and
generates, based on reception of data to be signed from the communication processor, the signature by using the nonce value and the network lock data and transmits the generated signature to the communication processor, and
the communication processor stores, based on reception of the encrypted nonce value from the security sub system, the encrypted nonce value in the application processor, and
stores, based on reception of the signature value from the security sub system, the signature value and the network lock data in the application processor.

3. The electronic device of claim 2, wherein
when the application processor receives an initialization request signal from a communication processor (220), the application processor deletes the stored signature value and network lock data.

4. The electronic device of claim 1, wherein the communication processor completes, based on a match between the signature value received from the security sub system and a signature value for another nonce value stored in the application processor, verification of the electronic device and releases a security lock.

5. The electronic device of claim 1, wherein the communication processor determines, based on a mismatch between the signature value received from the security sub system and the signature value stored in the application processor, that verification of the electronic device fails and restricts the use of the electronic device.

6. The electronic device of claim 1, wherein the network lock data includes at least one of network lock information, whether the network lock is activated/deactivated, network lock type information, network lock service provider information, subscriber identity module (SIM) lock information, a network control key (NCK), a network subset control key (NSCK), a service provider control key (SPCK), a master control key (MCK), a corporate control key (CCK), a personalization control key (PCK), personal identification number (PIN) information, a network lock password, a password, network information, MCC/MNC allow list of the SIM, MCC/MNC block list of the SIM, temporary unlock status, a temporary unlock time, or temporary unlock validity period.

7. The electronic device of claim 1, further comprising:
a key module,
wherein the key module uses, as a security key, a unique value fused to an one time programmable (OTP) memory or an eFuse to perform the security function of the security sub system, and encrypts or signs data received from a communication processor (220) to which an access right is assigned based on the security key.

8. The electronic device of claim 7, wherein the key module performs at least one of a crypto operation, a hash operation, or a key derivation function (KDF) operation based on the security key, and
the security sub system generates a signature for the data received from the communication processor (220) using the key module.

9. The electronic device of claim 1, wherein the security sub system performs, based on the reception of the request for encrypting or decrypting the nonce value from the communication processor, the encryption and/or decryption of the nonce value by using a symmetric key scheme or an asymmetric key scheme, and
a symmetric key encryption scheme includes at least one of encryption algorithms of advanced encryption standard (AES), data encryption standard (DES), 3DES, Aria, IDEA, SEED, RC5, or Twofish scheme, and
an asymmetric key encryption scheme includes at least one of encryption algorithms of RSA, Robin, ECC, ECDH, ECIES, DSS, DSA, ElGamal, Rabin scheme, or post quantum cryptography (PQC).

10. The electronic device of claim 1, wherein the security sub system generates the signature based on the reception of the request for the network lock signature from the communication processor,
a signature scheme includes an asymmetric key message authentication scheme or a message authentication code (MAC) scheme, and
a type of the signature includes at least one of an RSA digital signature, a Lamport signature, an ElGamal signature, a Schnorr signature, a digital signature standard (DSS), a digital signature algorithm (DSA), ECDSA, KCDSA/EC-KCDSA, a hash-based message authentication code (HMAC), a cipher-based MAC (CMAC), NMAC, a cipher block chaining MAC (CBC-MAC), a quantum signature, or a quantum digital signature (QDS).

11. A method for configuring a network lock function of an electronic device, comprising:
receiving an encrypted nonce value and requesting decryption from a security sub system;
receiving a decrypted nonce value from the security sub system and requesting a signature from the security sub system based on the nonce value;
receiving a signature generated based on the nonce value and network lock data from the security sub system; and
performing verification by comparing the signature received from the security sub system with a pre-stored signature.

12. The method of claim 11, further comprising:
encrypting, based on reception of a request for encrypting the nonce value from the communication processor, the nonce value and transmitting the encrypted nonce value to the communication processor;
storing, based on reception of the encrypted nonce value from the security sub system, the encrypted nonce value on the application processor;
generating, based on reception of the data to be signed from the communication processor, the signature by using the nonce value and the network lock data and transmitting the generated signature to the communication processor; and
storing, based on reception of a signature value from the security sub system, the signature value and the network lock data on the application processor.

13. The method of claim 12, further comprising:
upon receiving an initialization request signal from a communication processor (220), deleting the signature value and the network lock data stored in the application processor.

14. The method of claim 11, wherein the performing of the verification by comparing the signature received from the security sub system with the pre-stored signature further includes completing, based on a match between a signature value received from the security sub system and a signature value for another nonce value stored in the application processor, the verification of the electronic device, and releasing a security lock.

15. The method of claim 11, wherein the performing of the verification by comparing the signature received from the security sub system with the pre-stored signature further includes determining, based on a mismatch between a signature value received from the security sub system and a signature value stored in the application processor, that the verification of the electronic device fails and restricting a use of the electronic device.
